# FASCICULE DE BREVET EUROPEEN

(11) **EP 0 891 303 B1**
(45) Date de publication et mention de la délivrance du brevet: **20.10.1999**
(21) Numéro de dépôt: 97916485.2
(22) Date de dépôt: 24.03.1997
(51) Int. Cl.: C02F 3/06, C02F 3/26, C02F 3/20

(54) **FILTRE DOUBLE FLUX POUR L'EPURATION BIOLOGIQUE D'EFFLUENTS**
ZWEISTROMFILTER FÜR DIE BIOLOGISCHE REINIGUNG VON ABWASSER
DUAL-FLOW FILTER FOR BIOLOGICAL EFFLUENT PURIFICATION

(30) Priorité: 02.04.1996 FR 9604120
(43) Date de publication de la demande: 20.01.1999
(73) Titulaire: DEGREMONT, 92508 Rueil-Malmaison Cédex (FR)
(72) Inventeur: ROUSSEAU, Nicolas, F-92150 Suresnes (FR); MOLES, Jacques, F-92500 Rueil-Malmaison (FR); VITAL, Jean-Louis, F-92100 Boulogne-Billancourt (FR)
(74) Mandataire: Armengaud Ainé, Alain
(86) Numéro de dépôt international: FR9700516
(87) Numéro de publication internationale: WO9736830

(56) Documents cités:
- EP-A- 0 430 886
- WO-A-95/25695
- CH-A- 476 646
- CH-A- 661 264
- FR-A- 2 557 558
- US-A- 4 045 344

## Description

Cette invention concerne un filtre double flux pour l'épuration biologique d'effluents et notamment de l'eau.

On sait que diverses substances polluantes (azote ammoniacal, substances carbonées...) contenues dans des effluents et notamment dans l'eau peuvent être éliminées par voie biologique. Certaines des réactions, aérobies, ainsi mises en oeuvre s'effectuent grâce à l'oxygène de l'air et elles nécessitent donc un apport d'oxygène extérieur dans la mesure où cet oxygène n'est pas déjà présent dans l'eau à traiter.

On connaît de nombreux procédés et dispositifs permettant de réaliser une telle élimination biologique en présence d'oxygène. Ainsi, dans ce but, on utilise des réacteurs, des filtres ou des biofiltres.

Les réacteurs réalisent simultanément l'apport en oxygène et la mise à disposition de supports physiques pour le développement et le maintien des bactéries.

Les filtres utilisent de l'oxygène déjà présent dans l'eau et leur matériau filtrant sert de support pour le développement et le maintien des bactéries. En plus de la réaction biologique, les filtres assurent les fonctions habituelles de rétention des matières en suspension, suivie de leur élimination lors du lavage.

Les biofiltres combinent les fonctions réalisées par les réacteurs et les filtres.

Ainsi, la réalisation des biofiltres nécessite la combinaison dans une même enceinte de toutes les fonctions nécessaires à l'élimination des substances polluantes par voie biologique : fonctions de supportage des bactéries, fonctions d'aération et fonctions de lavage. On conçoit qu'une telle combinaison puisse conduire à une réalisation complexe donc coûteuse à la fois en ce qui concerne les frais de fabrication et ceux de fonctionnement et d'entretien. Par ailleurs, l'aération interne mise en oeuvre dans les biofiltres entraîne une agitation du lit de matériau granulaire et cette agitation peut nuire à la formation de la biomasse sur le matériau granulaire qui lui sert de support. L'aération interne peut également nuire, pour les mêmes raisons, à la qualité de l'eau filtrée.

En conséquence, la présente invention se propose d'apporter un dispositif pour l'élimination biologique des substance polluantes contenues notamment dans de l'eau brute à traiter, qui de façon particulièrement économique, combine avantageusement les diverses fonctions rappelées ci-dessus permettant de réaliser cette élimination biologique. L'invention est basée sur un mode de réalisation de filtres de traitement d'eau connus sous le nom de filtres à double flux. On rappellera que ces filtres sont constitués de deux cellules de filtration parcourues en série. La première cellule est parcourue à flux ascendant et la deuxième cellule est parcourue à flux descendant. Un exemple de réalisation d'un tel filtre à double flux est décrit dans DE-A-2 355 422. Ce type de filtre est utlisé en particulier comme filtre à charbon actif.

On connaît en outre par CH-A-661 264 un système de deux filtres disposés en série, fonctionnant tous deux avec une circulation du flux dirigée de haut en bas, ces deux filtres étant séparés par un caisson intermédiaire pourvu de moyens d'aération.

Partant de cet état de la technique, la présente invention apporte un filtre double flux pour l'épuration biologique d'effluents et notamment de l'eau comportant au moins deux cellules de filtration, disposées en série, en liaison hydraulique, de manière à être parcourues successivement par l'effluent à traiter, ces deux cellules étant séparées par un caisson intermédiaire pourvu de moyens d'aération, caractérisé en ce que la première cellule de filtration est du type à flux ascendant et la seconde cellule de filtration est du type à flux descendant, et en ce que l'aération dans ledit caisson intermédiaire s'effectue à contre courant du flux liquide circulant dans ledit caisson, avec une circulation des flux dirigée à l'aide d'une cloison siphoïde.

L'invention vise en outre un filtre double flux pour l'épuration biologique d'effluents et notamment de l'eau comportant au moins deux cellules de filtration disposées en série et , en liaison hydraulique, de manière à être parcourues successivement par l'effluent à traiter, lesdites cellules étant séparées respectivement par un caisson intermédiaire pourvu de moyens d'aération caractérisé en ce qu'il comporte n cellules de filtration parcourues successivement par l'effluent à traiter et n - 1 caissons intermédiaires, chacun comportant lesdits moyens d'aération, chaque caisson intermédiaire étant interposé entre deux cellules de filtration successives et étant parcouru par l'effluent à traiter, soit avec une circulation des flux dirigée au moyen d'une cloison siphoïde, soit à flux ascendant.

Ainsi, selon l'invention, on utilise le canal qui est situé entre les deux cellules (et qui est généralement utilisé pour la récupération des eaux de lavage) pour réaliser une aération intermédiaire et augmenter ainsi les rendements de réaction sur la seconde cellule. En outre, cette disposition conforme à l'invention permet de réaliser l'aération sans perturber aucunement les processus de filtration qui se déroulent dans les cellules.

Selon l'invention, le caisson intermédiaire peut être utilisé afin d'injecter des réactifs succeptibles d'améliorer l'activité biologique (notamment nutriment du type phosphate, oligo-éléments ...). Ce même caisson intermédiaire peut être utilisé pour effectuer une injection en continu, par exemple de sels d'ammonium, afin de conserver un minimum de biomasse active, en l'absence de pollution azotée, cette injection étant arrêtée en cas d'apparition de pics de pollution à nitrifier. L'addition peut être effectuée par l'intermédiaire de moyens de diffusion et de mélange.

Selon l'invention, les moyens d'aération peuvent être réalisés sous la forme d'un diffuseur tel qu'un mélangeur statique ou dynamique. Ils peuvent être également du type à matériau poreux rigide ou du type à membrane poreuse.

Les moyens d'aération peuvent utiliser de l'air ou de l'oxygène pur.

D'autres caractéristiques et avantages de la présente invention ressortiront de la description faite ci-après en référence aux dessins annexés qui en illustrent les exemples de réalisation dépourvus de tout caractère limitatif.

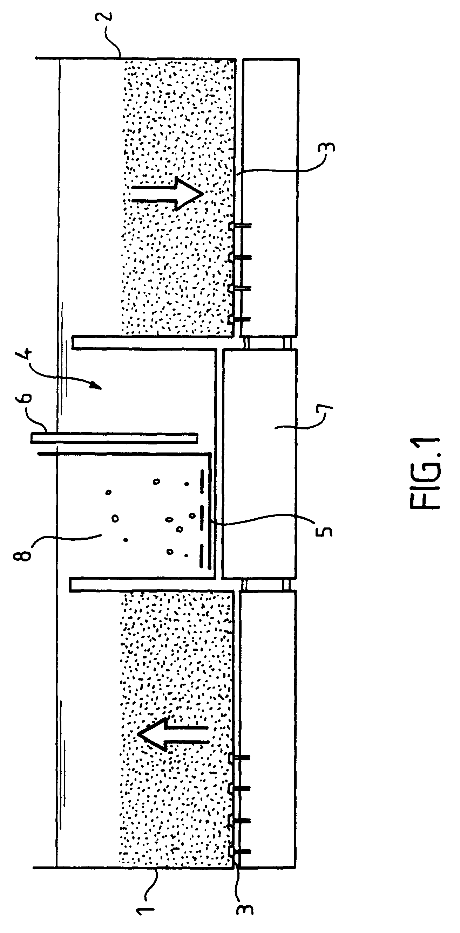

Sur les dessins :
- La figure 1 est une vue schématique en coupe transversale d'un mode de réalisation d'un filtre double flux selon la présente invention;
- La figure 2 est une vue schématique similaire à la figure 1 illustrant un second exemple de réalisation d'un filtre double flux selon l'invention et,
Comme on le voit sur la figure 1, dans cet exemple de réalisation, le filtre double flux selon l'invention comporte une première cellule de filtration 1, comprenant comme connu un plancher à buselures 3 pour l'introduction de l'effluent à traiter, ce dernier circulant dans cette cellule de façon ascendante comme l'indique la flèche. Le filtre comporte une seconde cellule 2 du même type que la première dans laquelle l'effluent à traiter circule selon un flux descendant. Selon l'invention, on interpose un caisson intermédiaire 4 entre les cellules 1 et 2 de manière que l'effluent à traiter circule en série entre la première cellule, ce caisson intermédiaire et la seconde cellule. Ce caisson intermédiaire comporte des moyens d'aération schématisés ici par un diffuseur 5. Ainsi qu'on l'a précisé ci-dessus, ces moyens, de type connu peuvent être constitués d'un mélangeur statique ou dynamique ou être du type à matériau poreux rigide ou du type à membrane poreuse. Le dispositif d'aération 5 peut utiliser de l'air ou de l'oxygène pur.

Dans l'exemple de réalisation illustré par la figure 1, le flux, dans le caisson intermédiaire 4 est dirigé au moyen d'une cloison siphoïde 6, les vitesses des fluides étant choisies de manière à permettre un échange optimal entre le gaz d'oxygénation introduit dans la zone d'aération 8 par les moyens d'aération 5 et l'effluent, par exemple l'eau à traiter.

Sous le caisson intermédiaire 4, on a prévu le caisson de lavage 7 des filtres, cette disposition étant classique sur les filtres à double flux. Ainsi, selon l'invention, on utilise l'enceinte située sous le caisson intermédiaire pour réaliser la reprise des eaux de lavage de deux cellules de filtration 1 et 2.

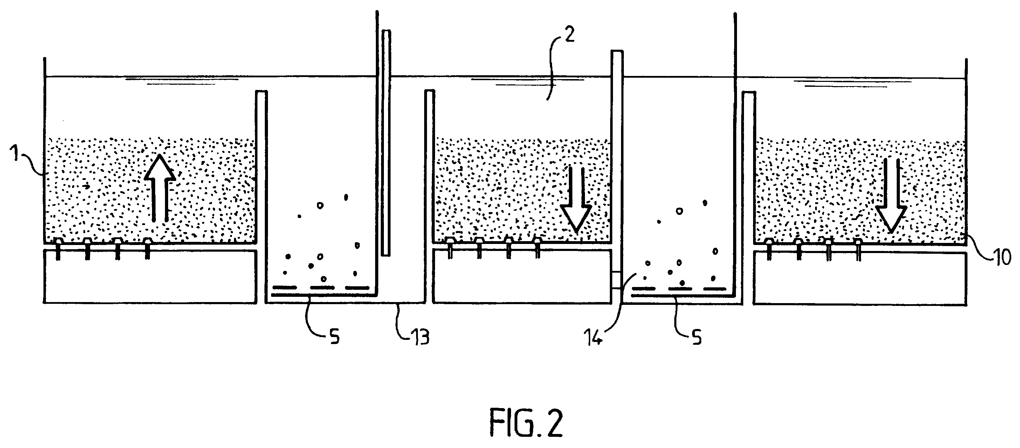

Dans l'exemple de réalisation illustré par la figure 2, le filtre double flux comprend trois cellules de filtration 1, 2 et 10 disposées en série et parcourues successivement par l'effluent à traiter, chacune de ces cellules étant du même type que celles décrites ci-dessus. Comme on le voit sur cette figure, on a prévu entre deux cellules successives, un caisson intermédiaire, respectivement 13 et 14 chacun comportant ses moyens d'aération 5 comme décrit ci-dessus en référence à la figure 1.

Cette même disposition peut être généralisée à n cellules de filtration également disposées en série, et dans ce cas, on prévoit n - 1 caissons intermédiaires avec leurs moyens d'aération, chacun de ces caissons intermédiaires étant disposé entre deux cellules successives.

Ainsi qu'on l'a déjà mentionné ci-dessus, la zone d'aération du caisson intermédiaire peut être utilisée pour l'addition de réactifs permettant d'améliorer l'activité biologique, ou d'un produit dopant, cette addition étant réalisée à l'aide de moyens tels qu'un système de diffusion ou de systèmes mélangeurs de type classique.

On a donné ci-après un exemple de mise en oeuvre du filtre double flux selon l'invention. Il demeure bien entendu que cet exemple n'est donné qu'à titre indicatif et qu'il ne présente aucun caractère limitatif.

L'eau à traiter, contenant une certaine concentration en oxygène dissous (par exemple la valeur de la saturation à 15°C, soit 9 mgO2/l), est introduite dans la première cellule. Cette eau contient également 3 ppm de NH4⁺ La réaction biologique permet, sans apport supplémentaire d'oxygène, d'éliminer (au mieux) un peu moins des deux tiers de la quantité de NH4⁺ entrante. L'eau sort donc de la première cellule avec environ 1 ppm de NH4⁺ et environ 1 ppm en oxygène dissous.

Une aération est réalisée dans le caisson intermédiaire, après la première cellule du filtre, au moyen de membranes poreuses disposées à intervalles réguliers au fond du caisson. Ces membranes poreuses, distribuent un débit de gaz constitué de bulles d'air d'environ 2 mm de diamètre. Cette aération rajoute à l'eau environ 60% de la valeur de la concentration en oxygène à saturation et permet ainsi à la réaction biologique d'éliminer la quantité de NH4⁺ restante.

Cet exemple démontre clairement l'efficacité du filtre selon la présente invention, celui-ci pouvant être mis en oeuvre de façon particulièrement économique comme cela ressort de la lecture de la description qui précède.

Il demeure bien entendu que la présente invention n'est pas limitée aux exemples de réalisation décrits et/ou représentés mais qu'elle en englobe toutes les variantes qui entrent dans le cadre de la portée des revendications annexées

## Revendications

1. Filtre double flux pour l'épuration biologique d'effluents et notamment de l'eau comportant au moins deux cellules de filtration, disposées en série, en liaison hydraulique, de manière à être parcourues successivement par l'effluent à traiter, ces deux cellules (1, 2) étant séparées par un caisson intermédiaire (4) pourvu de moyens d'aération (5), caractérisé en ce que la première cellule de filtration (1) est du type à flux ascendant et la seconde cellule de filtration (2) est du type à flux descendant, et en ce que l'aération dans ledit caisson intermédiaire (4) s'effectue à contre courant du flux liquide circulant dans ledit caisson, avec une circulation des flux dirigée à l'aide d'une cloison siphoïde (6).

2. Filtre double flux pour l'épuration biologique d'effluents et notamment de l'eau comportant au moins deux cellules de filtration disposées en série et, en liaison hydraulique, de manière à être parcourues successivement par l'effluent à traiter, lesdites cellules (1, 2, 10) étant séparées respectivement par un caisson intermédiaire (13 ; 14) pourvu de moyens d'aération (5), caractérisé en ce qu'il comporte n cellules de filtration (1, 2, 10), parcourues successivement par l'effluent à traiter et n - 1 caissons intermédiaires (13, 14), chacun comportant lesdits moyens d'aération (5), chaque caisson intermédiaire étant interposé entre deux cellules de filtration successives et étant parcouru par l'effluent à traiter, soit avec une circulation des flux dirigée au moyen d'une cloison siphoïde, soit à flux ascendant.

3. Filtre double flux selon l'une quelconque des revendications précédentes caractérisé en ce que la partie (7) du caisson intermédiaire (4) comportant les moyens d'aération sert à la reprise des eaux de lavage des deux cellules de filtration (1 et 2) entre lesquelles il est interposé.

4. Filtre double flux selon l'une quelconque des revendications précédentes caractérisé en ce que les moyens d'aération (5) du ou des caissons intermédiaires (4, 13, 14) sont du type à matériau poreux rigide.

5. Filtre double flux selon l'une quelconque des revendications 1 à 3 caractérisé en ce que les moyens d'aération (5) du ou des caissons intermédiaires (4, 13, 14) sont réalisés sous la forme d'un diffuseur, tel qu'un mélangeur statique ou dynamique.

6. Filtre double flux selon l'une quelconque des revendications 1 à 3 caractérisé en ce que les moyens d'aération (5) du ou des caissons intermédiaires sont du type à membrane poreuse.

7. Filtre double flux selon l'une quelconque des revendications précédentes caractérisé en ce que les moyens d'aération (5) utilisent de l'air ou de l'oxygène pur.

8. Filtre double flux selon l'une quelconque des revendications précédentes caractérisé en ce que chaque caisson intermédiaire comporte des moyens de diffusion et de mélange permettant l'addition de réactifs dans la zone d'aération dudit caisson, afin d'améliorer l'activité biologique.

9. Filtre double flux selon la revendication 8 caractérisé en ce que chaque caisson intermédiaire comporte des moyens pour l'injection de nutriments du type phosphate ou d'oligo-éléments.

10. Filtre double flux selon la revendication 8 caractérisé en ce que chaque caisson intermédiaire comporte des moyens pour effectuer une injection en continu, notamment de sels d'ammonium, afin de conserver un minimum de biomasse active en l'absence de pollution azotée, cette injection étant arrêtée en cas d'apparition de pics de pollution à nitrifier.

## Claims

1. Dual-flow filter for the biological purification of effluents and notably water, having at least two filtration cells, disposed in series, in hydraulic connection with each other, so as to have the effluent to be treated run through them successively, these two cells (1, 2) being separated by an intermediate chamber (4) provided with aeration means (5), characterized in that the first filtration cell (1) is of the upward flow type and the second filtration cell (2) is of the downward flow type, and in that the aeration in the said intermediate chamber (4) is effected counter to the flow of liquid circulating in the said chamber, with a circulation of the flows directed by means of a siphonic partition (6).

2. Dual-flow filter for the biological purification of effluents and notably water, having at least two filtration cells, disposed in series, in hydraulic connection with each other, so as to have the effluent to be treated run through them successively, the said cells (1, 2, 10) being separated respectively by an intermediate chamber (4) provided with aeration means (5), characterized in that it includes n filtration cells (1, 2, 10), through which the effluent to be treated runs successively, and n-1 intermediate chambers (13, 14) each having the said aeration means (5), each intermediate chamber being interposed between two successive filtration cells and having the effluent to be treated run through it, either with a circulation of the flows directed by means of a siphonic partition, or with an upward flow.

3. Dual-flow filter according to any one of the preceding claims, characterized in that the part (7) of the intermediate chamber (4) having the aeration means serves for the reworking of the water washing the two filtration cells (1 and 2) between which it is interposed.

4. Dual-flow filter according to any one of the preceding claims, characterized in that the aeration means (5) of the intermediate chamber or chambers (4, 13, 14) are of the rigid porous material type.

5. Dual-flow filter according to any one of Claims 1 to 3, characterized in that the aeration means (5) of the intermediate chamber or chambers (4, 13, 14) are produced in the form of a diffuser, such as a static or dynamic mixer.

6. Dual-flow filter according to any one of Claims 1 to 3, characterized in that the aeration means (5) of the intermediate chamber or chambers are of the porous membrane type.

7. Dual-flow filter according to any one of the preceding claims, characterised in that the aeration means (5) use air or pure oxygen.

8. Dual-flow filter according to any one of the preceding claims, characterized in that each intermediate chamber has diffusion and mixing means enabling reagents to be added in the aeration zone of the said chamber, in order to improve the biological activity.

9. Dual-flow filter according to Claim 8, characterized in that each intermediate chamber has means for ejecting nutriments of the phosphate type or oligo-elements.

10. Dual-flow filter according to Claim 8, characterized in that each intermediate chamber has means for effecting a continuous injection, notably of ammonium salts, in order to preserve a minimum of active biomass in the absence of nitrogenous pollution, this injecting being stopped in the event of appearance of pollution peaks to be nitrified.

## Patentansprüche

1. Doppelstromfilter zur biologischen Reinigung flüssiger Abprodukte und insbesondere von Wasser, welcher mindestens zwei in Reihe geschaltete Filterzellen umfaßt, die derart hydraulisch miteinander verbunden sind, daß sie nacheinander von dem zu behandelnden flüssigen Abprodukt durchströmt werden, wobei diese Zellen (1, 2) durch einen mit Belüftungsmitteln (5) versehenen Zwischenbehälter (4) getrennt sind, **dadurch gekennzeichnet**, **daß** die erste Filterzelle (1) mit aufsteigendem Strom und die zweite Filterzelle (2) mit absteigendem Strom arbeitet und daß die Belüftung im Zwischenbehälter (4) im Gegenstrom zu dem flüssigen Fluid erfolgt, das durch diesen Behälter mit einer Strömungsrichtung fließt, die mittels einer durchlässigen Trennwand (6) erzwungen wird.

2. Doppelstromfilter zur biologischen Reinigung flüssiger Abprodukte und insbesondere von Wasser, welcher mindestens zwei in Reihe geschaltete Filterzellen umfaßt, die derart hydraulisch miteinander verbunden sind, daß sie nacheinander von dem zu behandelnden flüssigen Abprodukt durchströmt werden, wobei diese Zellen (1, 2, 10) jeweils durch einen mit Belüftungsmitteln (5) versehenen Zwischenbehälter (13; 14) getrennt sind, **dadurch gekennzeichnet**, **daß** er n Filterzellen (1, 2, 10), die nacheinander von dem zu behandelnden flüssigen Abprodukt durchströmt werden, und n - 1 Zwischenbehälter (13, 14) umfaßt, wobei jeder die Belüftungsmittel (5) enthält und jeder Zwischenbehälter zwischen zwei aufeinander folgenden Filterzellen eingebaut ist und von dem zu behandelnden flüssigen Abprodukt entweder mit einer Strömung, die von einer durchlässigen Trennwand erzwungen wird, oder mit einer aufsteigenden Strömung durchflossen wird.

3. Doppelstromfilter nach einem der vorhergehenden Ansprüche, **dadurch gekennzeichnet**, **daß** der Teil (7) des Zwischenbehälters (4), welcher die Belüftungsmittel enthält, zur Aufnahme des Waschwassers aus den zwei Filterzellen (1 und 2) dient, zwischen denen er eingebaut ist.

4. Doppelstromfilter nach einem der vorhergehenden Ansprüche, **dadurch gekennzeichnet**, **daß** die Belüftungsmittel (5) des/ der Zwischenbehälter/s (4, 13, 14) aus einem porigen starren Material bestehen.

5. Doppelstromfilter nach einem der Ansprüche 1 bis 3, **dadurch gekennzeichnet**, **daß** die Belüftungsmittel (5) des/der Zwischenbehälter/s (4, 13, 14) in Form eines Verteilers wie eines statischen oder dynamischen Mischers ausgeführt sind.

6. Doppelstromfilter nach einem der Ansprüche 1 bis 3, **dadurch gekennzeichnet**, **daß** die Belüftungsmittel (5) des/der Zwischenbehälter/s eine porige Membran besitzen.

7. Doppelstromfilter nach einem der vorhergehenden Ansprüche, **dadurch gekennzeichnet**, **daß** für die Belüftungsmittel (5) Luft oder reiner Sauerstoff verwendet wird.

8. Doppelstromfilter nach einem der vorhergehenden Ansprüche, **dadurch gekennzeichnet**, **daß** jeder Zwischenbehälter Verteilungs- und Vermischungsmittel enthält, welche die Zugabe von Reaktanden in die Belüftungszone dieses Behälters erlauben, um die biologische Aktivität zu erhöhen.

9. Doppelstromfilter nach Anspruch 8, **dadurch gekennzeichnet**, **daß** jeder Zwischenbehälter Mittel für die Zugabe von Nährstoffen wie Phosphat oder Spurenelementen enthält.

10. Doppelstromfilter nach Anspruch 8, **dadurch gekennzeichnet**, **daß** Jeder Zwischenbehälter Mittel zur kontinuierlichen Zugabe, insbesondere von Ammoniumsalzen, enthält, um ein Minimum aktiver Biomasse ohne stickstoffhaltige Schadstoffe aufrechtzuerhalten, wobei diese Zugabe gestoppt wird, wenn Spitzen zu nitrifizierender Schadstoffe auftreten.
